Europäisches Patentamt

European Patent Office

Office européen des brevets

(19)

(11) Publication number: **0 484 907 A2**

# (12) EUROPEAN PATENT APPLICATION

(21) Application number: **91118910.8**

(22) Date of filing: **06.11.91**

(51) Int. Cl.5: **G11B 5/55**

(30) Priority: **09.11.90 US 611248**

(43) Date of publication of application:
**13.05.92 Bulletin 92/20**

(84) Designated Contracting States:
**DE FR GB IT**

(71) Applicant: **BRIER TECHNOLOGY**
**2148 Bering Drive**
**San Jose, CA 95131(US)**

(72) Inventor: **Kelly, John J.**
**373 O'Connor Street**
**Menlo Park, CA 94025(US)**
Inventor: **McGrath, Michael**
**3126 Malvasia Court**
**Pleasanton, CA 94566(US)**
Inventor: **Miyamura, Harold**
**2446 Warburton Avenue**
**Santa Clara, CA 95051(US)**

(74) Representative: **Zenz, Joachim Klaus,**
**Dipl.-Ing. et al**
**Patentanwälte Zenz, Helber & Hosbach Am**
**Ruhrstein 1**
**W-4300 Essen 1(DE)**

(54) **Magnetic head positioning scheme using a capacitive transducer.**

(57) A method and apparatus for improving the accuracy and reliability of positioning magnetic recording heads (28) upon rotating magnetic media (30) in a flexible disk drive assembly. The disk drive of the present invention implements a closed loop head positioning scheme. A capacitive transducer assembly (32, 34) is used to provide track crossing information for track positioning purposes. The capacitive transducer scheme includes a transmitter (32) and a receiver (34). The receiver is mounted on the disk drive and is fixed relative to the transmitter which is mounted on the read/write head carriage (26). The relative positions of the transmitter and receiver is determined by comparing the phase of the transmitter signal to the transmitter-induced output signal of the receiver. A "comb" pattern is implemented in the transmitter and receiver and generates time coincident zero crossings that indicate track crossings. A special signature pattern, that may be separate from the track positioning pattern is used to identify a track zero location. Track zero and index position sensor (29) is fixed when the disk drive is manufactured. Any alignment errors are identified and an offset correction factor is generated to compensate for the errors. This offset compensation factor is stored in a nonvolatile memory (12) and is utilized by disk drive control electronics during operation of the drive to insure appropriate drive operation.

FIG. 2

## BACKGROUND OF THE INVENTION

### 1. FIELD OF THE INVENTION

This invention relates to the field of positioning and detecting the position of magnetic recording heads upon rotating magnetic media in a flexible or hard disk storage system.

### 2. BACKGROUND ART

Mass storage for computer or other information systems is typically provided by magnetic media storage systems such as rigid or flexible disk storage systems. A rotating disk having a magnetic media layer on the surface is accessed by a "read/write" head which is used to store and retrieve information from the disk surface. To store information on a magnetic media disk, flux reversals are induced in the magnetic particles comprising the surface. When a magnetic read/write head is passed over the flux reversals, a signal is induced in the head which can be decoded to provide information.

Typically, data is stored on a magnetic disk in a series of spiral or concentric "tracks" on the surface of the disk. The read/write head moves back and forth radially on the disk so that it can be selectively positioned over one of the tracks. Once in position over a track, the head remains in place as the track rotates beneath it, allowing the head to read or write data on the track.

In order to allow interchangeability of flexible media disks between flexible magnetic storage systems, the radius of the data tracks must be standardized. This assures that all disk drives will read and write data at the same absolute radius for each particular track number. This is accomplished by the use of a sensor which detects the position of the data recording heads when they are located at a standard radius (the "track zero" radius) from the center of rotation of the disk. This radius has been established by the American National Standards Institute (ANSI).

To effectively read and write data, it is necessary that the position of the tracks with respect to the head be known. In addition to knowing which track a head is over, it is necessary to know where on that particular track the head is positioned.

Individual data tracks are located in the prior art using a "dead reckoning," or open loop scheme. An open loop scheme is one in which there is no feedback for the task to be accomplished. That is, an assumption is made that if certain operations are performed, a desired result will take place. In terms of positioning a read/write head, it is assumed that if a read/write head currently located over a particular track (e.g., track 5) is moved a particular distance or number of tracks (e.g., 25 tracks) that it will then reside over a desired destination track (e.g., track 30). This is also known as a "relative positioning scheme" since it relies on relative distances between a current location and a desired location. Prior art open loop positioning schemes rely on a "stepper motor" for head positioning. The stepper motor controls the linear motion of the head carriage and displaces the head in discrete increments across the data tracks of the disk. The stepper motor has detent positions where it stops after each motion. The stepper motor is designed such that moving from one detent position to the next results in moving the read/write head by one track. By activating movement of the stepper motor for a fixed number of increments the head is moved a fixed amount.

An open loop or relative positioning generally requires that at least one location or track on the disk be known so that this location can serve as a reference point for all relative motion. Typically, the track zero location is used as the track positioning reference.

In the prior art, an "alignment disk" is employed to locate track zero. After the disk drive is manufactured, an "alignment disk" is inserted that contains position information that identifies the location of one track. Usually this is a track near the middle of the disk. The position information is read by the read/write heads permitting positive identification of the center of the track. The stepper motor is held in a detent position and then the stepper motor is either rotated or moved linearly until the read/write heads are centered on the track. The stepper motor is then locked in place.

The carriage is then pulled back to its most retracted position and slowly moved forward until the track zero location is identified by the read/write heads. At this point, a manually adjustable sensor known as the "track zero sensor" is moved into alignment with a track zero identification mark (ID mark) usually mounted on the read/write head carriage. The track zero sensor may be an optical sensor, and the ID mark may be a flag that interrupts the beam in the optical sensor. Once the sensor is aligned properly, the sensor is manually locked in place, such as with a screw, and a thread locking compound is applied. The manufacturing process is made more complicated and more expensive by this required manual adjustment of the detector.

Thereafter, when the disk drive is in service and new disks are inserted into the disk drive, the track zero radius of each disk is set to be that point at which the track zero sensor is aligned with the ID mark on the read/write head carriage. In the prior art, flexible media disks do not contain any position information. Therefore, all radial position information is established relative to the established track zero location.

The stepper motor system described above is used for standard capacity floppy disk drives, that is, disk drives reading and writing on disks that have a capacity of one, two or four megabytes. There are also "high capacity" disk drives capable of reading and writing on disks having a storage capacity of twenty or more megabytes. One such system is described in U. S. Patent Application serial number 07/269,585, filed on November 10, 1988 and entitled "Method and Apparatus for Positioning a Read/Write Mechanism" and assigned to the assignee of the present patent application. This patent application is incorporated herein by reference. This patent application describes a novel servo pattern that allows the number of data tracks that can be defined on a flexible media disk to be greatly increased over standard floppy disk drive schemes. This permits implementation of a floppy disk drive that is capable of storing, for example, up to 40 megabytes of data on a single floppy disk.

For purposes of this patent application, a "standard disk drive" refers to a floppy disk drive that can read and write floppy disks formatted for one, two or four megabytes of data. A "standard floppy disk" refers to a floppy disk formatted for one, two, or four megabytes of data. A "high capacity floppy drive" refers to a floppy disk drive that can read and write floppy disks formatted for 20 or more megabytes of data. A "high capacity floppy disk" refers to a floppy disk formatted for 20 or more megabytes of data.

Both the high capacity drive and the standard floppy disk drive referred to herein generally use a 3 1/2" floppy disk form factor, although such drives may use alternate form factors. High capacity disk drives generally do not use a stepper motor for radial positioning. Rather, In the high capacity drive, a "voice coil" motor is used to position the read/write head carriage. The high capacity system is a closed loop servo system where for example, buried servo signals are read to provide track position information. The servo information is used to generate position signals so that the voice coil motor can be used to accurately position the read/write heads. Because of the narrow tracks required to achieve high capacity, the open loop positioning scheme of prior art disk drives cannot be used directly.

It is desired to provide a single disk drive that can read from and write to both standard floppy disks and high capacity floppy disks. Therefore, a head positioning scheme is required that can position read/write heads over high capacity floppy disks that have servo information and standard floppy disks that do not have recorded servo information, using a voice coil motor.

A number of head positioning schemes exist in the prior art. For example, Hannon, U. S. Patent 4,823,205, describes a capacitive sensor for detecting a servo pattern on the surface of a disk. This probe is sensitive to changes in capacitance between the sensor and the disk surface. The capacitive sensor head scheme of Hannon utilizes regularly spaced conductive patterns formed on the surface of the disk.

IBM Technical Disclosure Bulletin, Vol. 26 No. 6, describes a capacitive detector used in servo systems. This reference discloses the forming of reflective patterns or conductive patterns on a disk surface. The conductive patterns are capacitively detected.

Cocke, U. S. Patent 4,587,579, describes a servo system for positioning a read/write head over a disk. The disk contains a set of spiral servo patterns which can be read either optically or capacitively. Both a position pattern and a second "reference" pattern are provided so that the position signal may be extracted using phase sensitive techniques. The resulting phase information is used to determine the radial position of the read/write head.

Golo, U. S. Patent 4,639,906, discloses a servo control system in which the position of a read/write head is derived by capacitively sensing minute pits in a ferromagnetic layer on the disk. The pits are arranged in a pattern which indicates the radial position of the sensing electrode. The pits are detected by making a microwave capacitance measurement with the electrode.

Krongelb, U. S. Patent 4,737,877, describes a method for providing a disk with a servo pattern that may be sensed either optically or capacitively. In this invention, a thin metal film is deposited on the disk and covered by a dielectric layer.

None of the prior art schemes provide a method for positioning a read/write head when position information is not available on the disk surface itself.

## INDEX DETECTION

Interchangeability of disks is not only affected by the track-positioning accuracy, but is also dependent on the index-positioning accuracy. Protocol for recording data on a flexible disk requires a detector to indicate when a specific position on the circumference of the magnetic media has been reached. This position is referred to as the index position and is the point where the read/write head begins to read or write data on sector zero. That is, the index is the "start/finish line" of each data track.

Disk operation requires precise timing pulses which indicate the placement of the index position on the circumference of the magnetic media. These pulses are generated by a magnetic or optical index sensor.

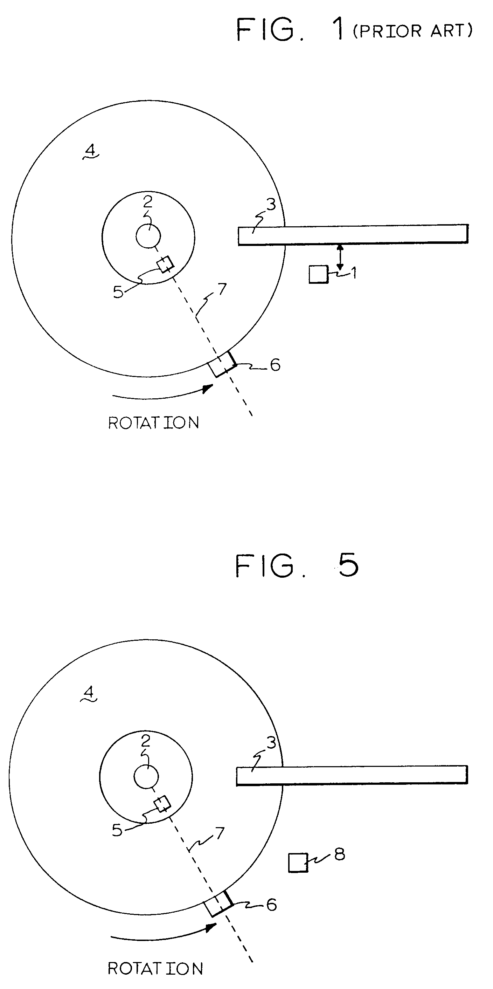

Figure 1 is a top-view illustration of a prior art spindle index sensor. In Figure 1, flexible disk 4 is rotated by spindle 2. A read/write head positioning assembly 3 is used to position the read/write heads in the radial direction. The flexible disk 4 includes an opening, referred to as the "index hole." The index hole is registered to a protruding member so that the floppy disk is in a fixed relationship to the spindle each time it is inserted into the disk drive. A magnet 6 or some other ID marker is mounted on the hub of the spindle motor so that it is in alignment along an imaginary radial line 7 with the index hole 5. This radial line 7 between index hole 5 and ID marker 6 is used to define the index of a floppy disk. An adjustable sensor 1 is mounted adjacent to the rotating disk so that periodically (once per revolution) the marker 6 and correspondingly, radial line 7, are in alignment with the sensor 1.

As spindle 2 rotates, the magnet 6 passes by the index sensor 1 and an index pulse is generated. This pulse provides timing information to the read/write circuits. In order that information recorded on one flexible disk drive may be read back into another, it is necessary that the position of the index pulse with respect to index hole 5 in the hub of the flexible disk 4 be standardized. In the prior art, after a disk drive is manufactured, an index alignment disk is inserted into the drive. The manually adjustable sensor 1 is positioned so that the occurrence of the index pulse occurs at the desired time relative to the passing of the index hole through the radial line defined by the read/write heads and carriage. After the appropriate position is established, the sensor 1 is manually fixed in position.

A drawback of prior art index sensing schemes is the need for manual adjustment to compensate for variation of the circumferential position of the index sensor due to mechanical tolerances. This adjustment is performed during the manufacturing process and adds to the complexity and cost of manufacturing.

Thus, it is an object of the present invention to provide an index-positioning scheme in a flexible disk storage system that eliminates the adjustment of the physical location of the index sensor.

It is another object of the present invention to provide an improved track zero detector for a flexible disk storage system that increases accuracy and is simpler to manufacture.

It is yet another object of the present invention to provide an improved head positioning scheme in a disk storage system.

It is still another object of the present invention to provide a radial positioning scheme that can be used with standard floppy disks and high capacity floppy disks.

It is still another object of the present invention to provide a means to utilize a voice coil motor to emulate a stepper motor in a floppy disk drive

## SUMMARY OF THE PRESENT INVENTION

The present invention provides a method and apparatus for improving the accuracy and reliability of positioning magnetic recording heads upon rotating magnetic media in a flexible disk drive assembly. The disk drive of the present invention implements a closed loop head positioning scheme. A capacitive transducer assembly is used to provide position information for track positioning purposes. The capacitive transducer was chosen for low cost, low power consumption and low friction, however other transducers such as inductive and optical can be used. The capacitive transducer scheme includes a transmitter and a receiver. The receiver is mounted on the disk drive base in a location directly adjacent to the transmitter which is mounted on the read/write head carriage. Alternatively, the receiver could be mounted on the read/write head carriage and the transmitter mounted on the disk drive base. The relative positions of the transmitter and receiver are determined by comparing the phase of the transmitter signal to the transmitter-induced output signal of the receiver. A "comb" pattern is implemented in the transmitter and receiver and generates time coincident zero crossings of signals from the transmitter and the receiver that indicate phase alignment and relative position. A special signature pattern, that may be separate from the track positioning pattern is used identify a track zero location.

The present invention also provides a method and apparatus for elimination of manual adjustment of the track zero sensor and the index position sensor during the assembly and manufacture of a disk drive. The track zero and index position sensor are fixed when the disk drive is manufactured. Therefore, errors in the alignment of the track zero sensor and index position sensor may arise. The present invention identifies these alignment errors and generates an offset correction factor to compensate for the errors. This offset correction factor is stored in non-volatile memory and is utilized by the disk drive control electronics during operation of the drive to insure appropriate drive operation. After assembly of the disk drive, a special alignment disk is inserted into the drive that contains track position information, including track zero location information. The radius at which the track zero sensor produces its greatest output is compared to the actual head position on the disk.

If this radius differs from the track zero found on the alignment disk, the difference is used to generate an offset value. This offset value is stored in the non-volatile memory and is used for all future re-zero operations by the disk drive. By utilizing this track zero algorithm, a reduction of the number of parts used in the track zero detectors as well as a reduction in time and cost of assembly is achieved and eliminates a physical adjustment.

The non-volatile memory of the present invention also eliminates the need for the mechanical adjustment of the location of the index sensor as well as the mechanical parts which are required to allow the adjustment.

An index position sensor is mounted in a fixed position so that it will generate an index pulse in advance of the position of the index hole in the hub of the flexible disk. An alignment disk that contains index marks is inserted into the drive. The occurrence of the index sensor pulse sensor is compared to the occurrence of the index mark on the disk. An electronic timing circuit delays the index pulse until the proper moment and then issues the pulse to the read/write circuits and to the host system. The length of delay which is required is determined by the time difference between the non-adjustable index sensor and the index mark recorded in the data area of an alignment disk. This delay is stored in the non-volatile memory and used during operation of the disk drive.

The non-volatile memory can also be used to store the exact location of each data track. This eliminates the need for a high precision transducer resulting in much lower cost.

## BRIEF DESCRIPTION OF THE DRAWINGS

Figure 1 is a top view of a prior art spindle index sensor in a flexible disk drive assembly.

Figure 2 is a block diagram illustrating the preferred embodiment of the present invention.

Figure 3 is a flow chart illustrating the track zero re-zero operation of the present invention.

Figure 4 is a graph illustrating a typical track zero output voltage vs. track radius of the present invention.

Figure 5 is a top view of the spindle index sensor of the present invention.

Figure 6 is a view of the transducer receiver pattern of this invention.

Figure 7 is a plot of the ideal and actual outputs of the head positioning circuit of this invention.

Figure 8 is a view of the transducer transmitter pattern of this invention.

## DETAILED DESCRIPTION OF THE PRESENT INVENTION

A method and apparatus for improving the performance of the interchangeability of flexible disks in a disk drive assembly is described. This is accomplished by improving the accuracy and reliability of radial and tangential positioning of the disk with respect to the data head. In the following description, numerous specific details, such as index pulse time delay, type of memory, etc., are described in order to provide a more thorough description of the present invention. It will be apparent, however, to one skilled in the art, that the present invention may be practiced without these specific details. In other instances, well known features have not been described in detail in order not to unnecessarily obscure the present invention.

The present invention provides a closed loop positioning scheme with a transducer that provides phase alignment (relative position) information feedback to the head positioning circuitry. A capacitive transducer is utilized to provide phase alignment (relative position) information.

A capacitive transducer is a device that converts a displacement to a phase alignment change between the transmitter and receiver signals that are sent to control circuitry to determine relative position. The transducer comprises a transmitter and receiver that are capacitively coupled and are moved relative to one another. The relative positions of the transmitter and receiver are determined by comparing the phase of the transmitter signal to the transmitter-induced output signal of the receiver. The accuracy to which the relative positions can be determined depends on the precision with which the conductive elements of the transmitter and receiver are constructed. However, the resolution on the transducer is usually much greater than the accuracy.

The use of a capacitive transducer positioning assembly is particularly useful in a disk drive that is used to access both standard floppy disks and high capacity floppy disks. Such drives use a voice coil motor instead of a stepper motor for radial positioning. Therefore, the prior art method of positioning the read/write head over a standard floppy disk, which relies on stepper motors, cannot be utilized. The system of this invention is a means to provide position information to a control system so that a voice coil motor can be accurately positioned over a standard floppy disk. The invention can also be used in standard floppy drives or fixed media (hard) disk drives.

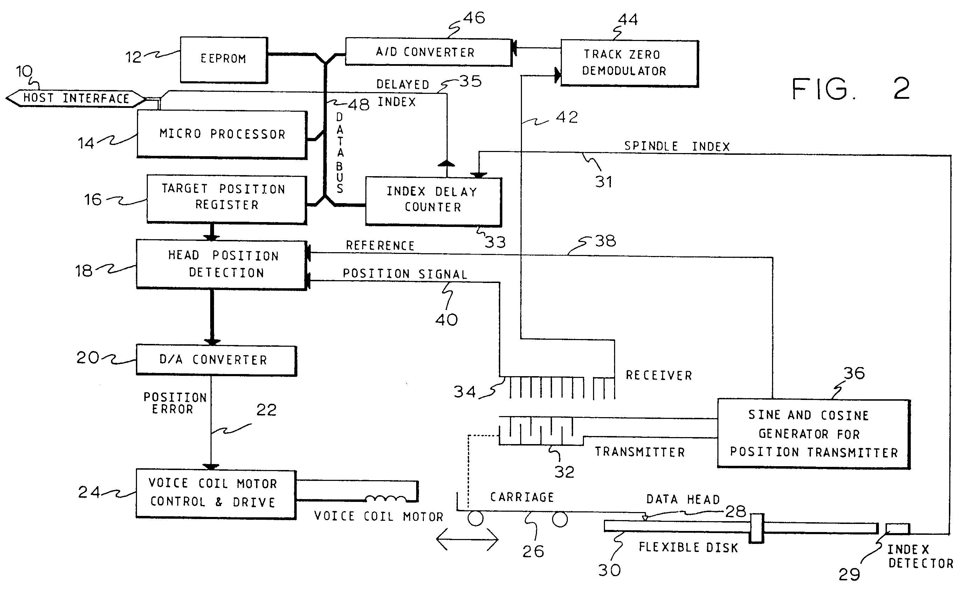

A block diagram of the preferred embodiment of the present invention is illustrated in Figure 2. The host interface 10 is coupled to and controls the instructions of microprocessor 14. Microprocessor 14 is coupled by data bus 48 to target position register 16. The output of target position register 16 is provided to head position detection block 18 which is subsequently coupled to digital-to-analog converter 20. The position error output 22 from D/A converter 20 is then sent to voice coil motor 24 that controls the mechanical adjustment of carriage 26. Coupled to the end of carriage 26 is data head 28 which reads information off flexible disk 30. Also coupled to carriage 26 is transmitter 32 of the capacitive transducer. Mounted adjacent to flexible disk 30 is index detector 29 which relays spindle index signal 31 to index delay counter 33. Index delay counter 33 sends delayed index signal 35 to host interface 10 and microprocessor 14.

Transmitter 32 is capacitively coupled to receiver 34 as well as coupled to sine and cosine generator 36. Sine and cosine generator block 36 outputs reference signal 38 back to head position detection block 18. Receiver 34 outputs position signal 40 to head position detection block 40. The track zero sensor section of receiver 34 outputs a track zero position signal 42 to track zero demodulator 44. The track zero demodulator block 44 is coupled to A/D converter 46 which is coupled to data bus 48, as well as EEPROM memory 12.

In operation, microprocessor 14 is commanded by host 10 to move the data head 28 in discrete steps either toward the inner radius or the outer radius of flexible disk 30. The microprocessor 14 changes the target position register 16 which sends the information about the new data head location to the head position detection block 18. This circuit block compares the current head location, using position signal 40, with the desired location and sends a correction signal to digital to analog converter 20.

The output signal of the D/A converter is the position error 22 which is converted into an electric current by voice coil motor drive 24. The current flows in the voice coil and moves the carriage in the required direction. Transmitter 32 is mounted on carriage 26 and moves with the carriage along the receiver 34. Transmitter 32 outputs a sine and cosine signal which are used as reference 38 for head position detection block 18. The output position signal 40 of receiver 34 is the weighted sum of the sine and cosine signals of transmitter 32. As transmitter 32 moves over receiver 34, the receiver signal shifts phase proportionally to the distance moved. The head position detection block 18 compares the receiver phase with reference signal 38 and generates a new correction signal. This feedback process continues until the data head has been moved to the location commanded by host 10.

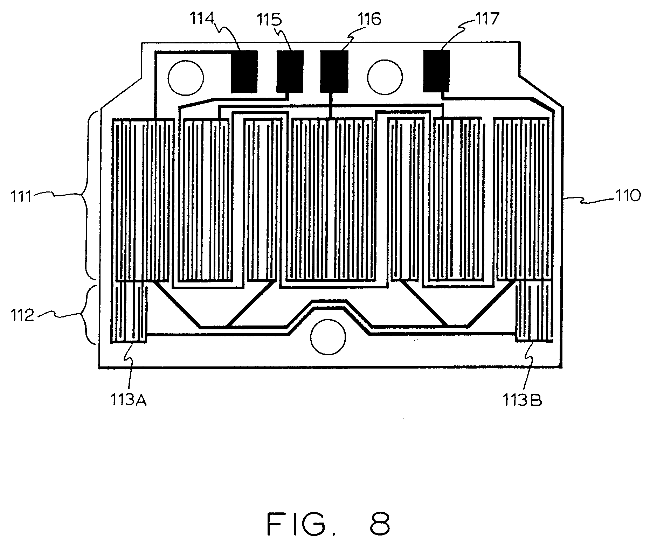

An example of the capacitive transducer transmitter/receiver pattern is illustrated in Figure 8. The transducer pattern used in the preferred embodiment of the present invention is an intersecting "comb" pattern comprised of interleaved elongated conductive strips coupled to conductive paths 101 and 102 respectively. An output signal is provided to the strips on output terminals 103 and 104. The pitch "P" 105 between the interleaved members should be uniform. The transmitter has a matching pattern and the transmitter and receiver move relative to each other. The operation of the position transducer of this invention is based on the capacitive coupling between the elements. The transmitter and receiver are positioned closely to each other and the capacitance between the comb patterns varies cyclically with movement with one complete cycle for each pitch distance travelled.

If the transmitter is excited with sinusoidal and cosinusoidal signals at terminals 114 through 117, whose phase angles are 90 degrees apart, the signal induced at the receiver terminals 101 and 102 will be a sinusoidal waveform that shifts in phase continuously with relative motion between receiver and transmitter. Therefore, movement of the transmitter and receiver relative to each other provides periodic phase alignment between the transmitter and receiver signals. If desired, the pitch of the comb pattern may be chosen to precisely match the desired dimensions of the track pitch. A capacitive transducer transmitter and receiver is available from Farrand Controls, 99 Wall Street, Valhalla New York, 10595. However, other suitable capacitive transducer mechanisms can be utilized in this invention.

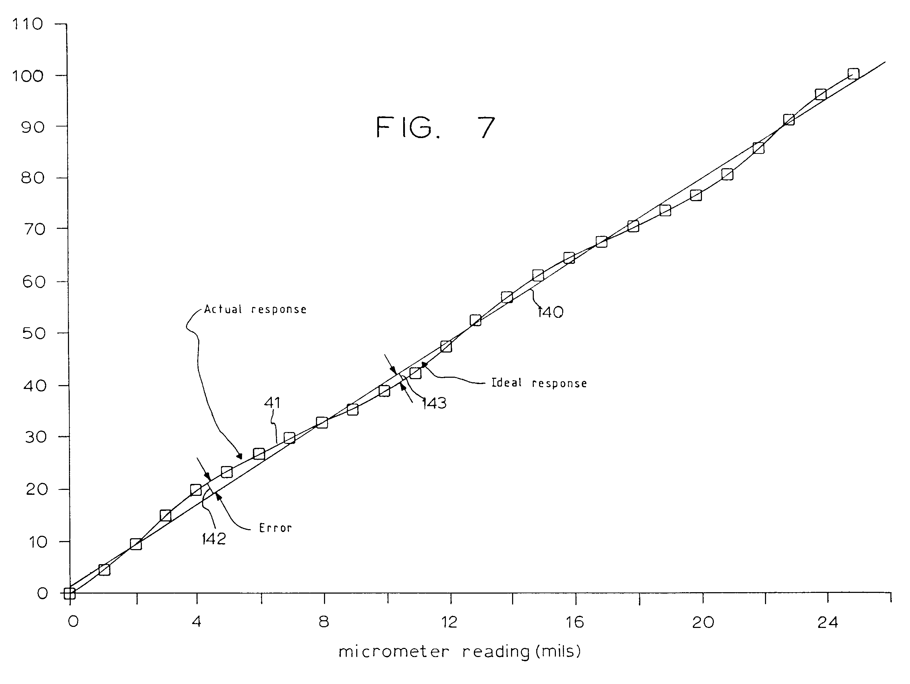

A plot of the output signal generated by the head positioning circuit 18 (Figure 2) is illustrated in Figure 7. The head position circuit 18 converts the cyclical output 140 of the capacitive transducer assembly to a linear signal representing track number versus carriage displacement. Line 140 illustrates the ideal response and output of the track position circuit 18. The ideal response 140 is a constant slope line that increases with carriage displacement. The amplitude of the output signal 140 can be used to calculate a track number indicating read/write head position.

The ideal signal 140 is generated when the pitch "P" between the conductive members of the capacitive transducer pattern are uniform and approximately equal. Depending on the manufacturing control, however, irregularities in the pitch "P" can result so that the pitch is not uniform over the length of the transmitter or receiver. In this case, the output signal 141 results. The output signal 141 is not a constant slope signal but rather varies according to pitch irregularity. This results in errors between the actual output signal of track position circuit 18 and the ideal output. These errors, such as error 142 of Figure 7 may be in the positive direction or in the negative direction such as error 143. The present invention takes advantage of the EEPROM memory of Figure 2 to provide a positioning system that is independent of irregularities in transducer pitch. This is accomplished by "characterizing" the output of the capacitive transducer assembly during manufacture of the disk drive.

Figure 7 is a plot of the output of the head position detection circuit 18 as a function of relative horizontal displacement of the capacitive transducer transmitter 32 and receiver 34.

A prototype of the disk drive was placed in a fixture to which a dial micrometer was attached. The spindle of the dial micrometer was mechanically coupled to the rear of the carriage 26 so that as the micrometer dial was rotated, the horizontal displacement of the carriage 26 relative to the base plate of the disk drive would be accurately indicated by the markings of the micrometer.

In normal operation in the high capacity mode (see U.S. patent application serial number 07/269,585), the head position detection circuit 18, when in position mode, generates an 8-bit binary number which is directly proportional to the displacement of the carriage from a particular radial position. This "on track" location, where the binary number is zero, can be set by the microprocessor 14 to be at any arbitrary radius at which the carriage is capable of being positioned. Once the heads are positioned at the desired radius, any deviation from this position is converted into a binary number by the head position detection circuit 18. This number is converted to an analog position error voltage by the D/A converter 20 which causes the voice coil motor and drive 24 to move the carriage in such a way that the error is decreased.

In high capacity mode, the data for the head position detection circuit 18 is supplied by two servo heads, one on the upper surface of the disk and one on the lower surface. These heads detect pre-recorded servo pulses. In the low density mode, the reference 38 and position signal 40 derived from the receiver 34, serve the same function.

The output of Figure 7 was obtained by disconnecting the voice coil motor and recording the value of the binary number as the carriage was displaced by the micrometer. The carriage was moved from the on-track location in increments of .001 inch. The binary number increased in proportion to the displacement of the carriage as indicated by the plot in Figure 7. For convenience, the binary readings were converted to decimal values before Figure 7 was plotted. The discrete readings at .001 inch intervals were connected with a smooth curve and labeled, "actual response."

A straight line, the "idea response," was superimposed upon the actual response for comparison.

After the disk drive has been manufactured, and before it is shipped to the customer for use, an alignment disk is inserted that contains track position information that can be read by the read/write heads and provided to the head positioning circuitry. The read/write head is moved across the entire surface of the alignment disk and the precise locations of the data tracks are determined. The output of the capacitive transducer assembly is noted for each track and a comparison between the actual output and the ideal output for each track is made. The result of the comparison is an offset value (if necessary) for each track location that is then stored in the non-volatile memory. When the drive is in actual operation, these offset values are utilized by the disk drive control circuitry to allow precise positioning of the read/write heads. This system eliminates the necessity of a high precision capacitive transducer, resulting in significantly lower cost.

Offsets are determined during disk drive manufacturing by inserting an alignment disk in the disk drive, then moving the head/carriage assembly until the track zero transducer sensor is activated (transducer zero position). The transducer phase alignment is noted. The head/carriage is then moved so that the head is precisely positioned over the center of the first track (disk track zero). The number of phase transitions is counted as the head/carriage is moved. The new phase alignment in the transducer is noted and an offset is determined (number of phase transitions) between the "transducer zero position" and the "disk track zero" position. The offset is stored in the EEPROM. The head/carriage is moved from track to adjacent track and the offset is determined (phase transitions), if any. This offset information is stored in the EEPROM. This procedure is repeated until all tracks on the disk have an associated offset determined and stored.

Thus, the nonlinearity of any type of position transducer could be mapped and corrected by determining the offsets for each discrete position. The offsets are stored in memory for use during future positioning operations.

During normal operation, the individual track locations are read by the microprocessor from the EEPROM whenever the host commands access to that particular track. The transducer characterization needs to be performed only once and is available for the life of the disk drive in the non-volatile memory. This process of standardization of data track radius allows interchangeability of flexible disks between different disk drives. The process also neutralizes the inherent inaccuracies of the capacitive transducer and allows much more economical parts to be used without degradation of performance.

For the data track zero, a separate process and software algorithm are employed to determine its location. A distinct track zero sensor from the capacitive transducer is required since a unique signature is needed to determine track zero. The receiver of the capacitive transducer contains a separate sensing element for track zero. To characterize the track zero sensor, the transmitter is moved across the receiver causing the track zero sensor output signal to increase amplitude until the track zero location is found. After this point, the amplitude declines. Referring to Figure 2, A/D converter 46 repeatedly samples track zero signals 42 that are received by track zero demodulator 44. Microprocessor 14 determines the radius of the maximum amplitude output signal and reports the location to host 10. If this track radius of the capacitive transducer is different from the radius found from the alignment disk, then the offset value is stored in the non-volatile memory. This offset is used for all future re-zero operations by the disk drive.

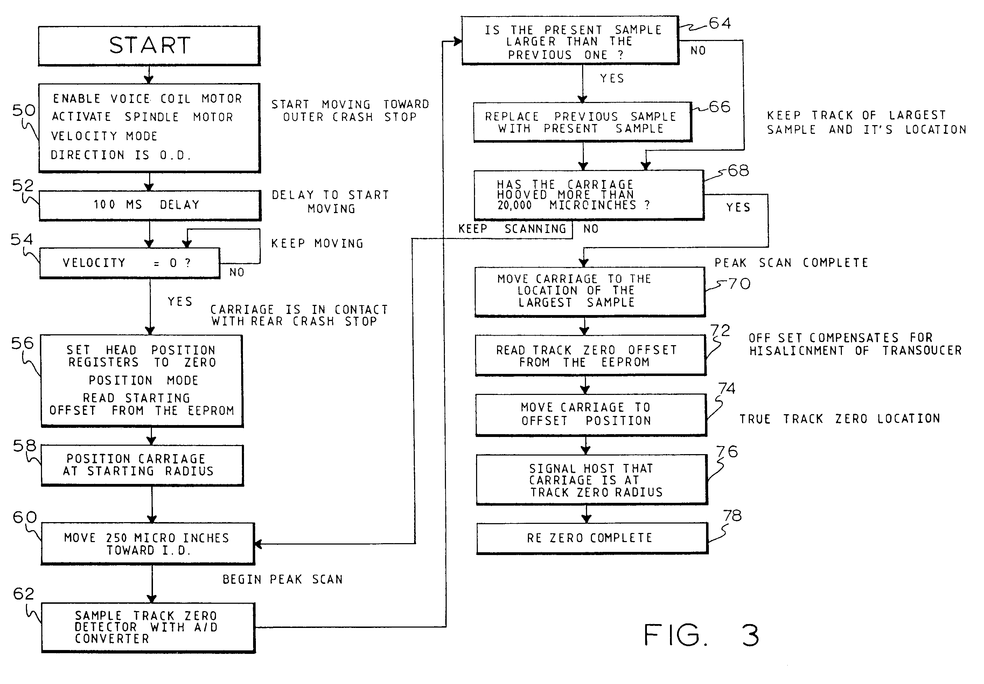

A flow chart for the track zero re-zero operation is provided in Figure 3. The chart shows that at the start, the voice coil motor is enabled so that the carriage will move out toward the outer diameter after a 100 msec delay. When the data head is at the outer radius, the microprocessor reads from the EEPROM a starting radius which will lessen the search time for the amplitude peak. At block 58, the carriage is positioned at the starting radius where at block 60, the carriage moves toward the inner radius 250 micro-inches. The peak scan begins at block 62. The track zero sensor is sampled by the A/D converter. At decision block 64, if the present sampled amplitude is greater than the previous sample, the previous sample is replaced by the present one. In either case, the remaining sample is moved to block 68 where it is determined if the carriage has been moved more than 20,000 micro-inches. If not, then the program moves back to block 60 to continue scanning. Block 68 is necessary to ensure that a false peak has not been recognized. Once the scan is complete, at block 70 the carriage is moved back to the location of the largest amplitude sample. At this point, block 72 reads the track zero offset from the EEPROM where at block 74 the carriage is moved to the offset position.

At block 76, the host is signaled that the carriage is at the track zero radius so that the re-zero operation is complete at block 78. The offset is added for it compensates for the misalignment of the transducer during the manufacture process, thus avoiding performance degradation.

The peak detection algorithm used by the microprocessor uses several methods to avoid a false reading. Several readings are averaged together to reduce false peaks caused by noise. The track zero location is defined to be on the negative slope of the peak rather than on the top because the voltage change with respect to position is more rapid at that point. Furthermore, the microprocessor confines the track zero search to the outer ten percent of the disk to speed up the re-zero operation and to avoid false peaks which may occur elsewhere.

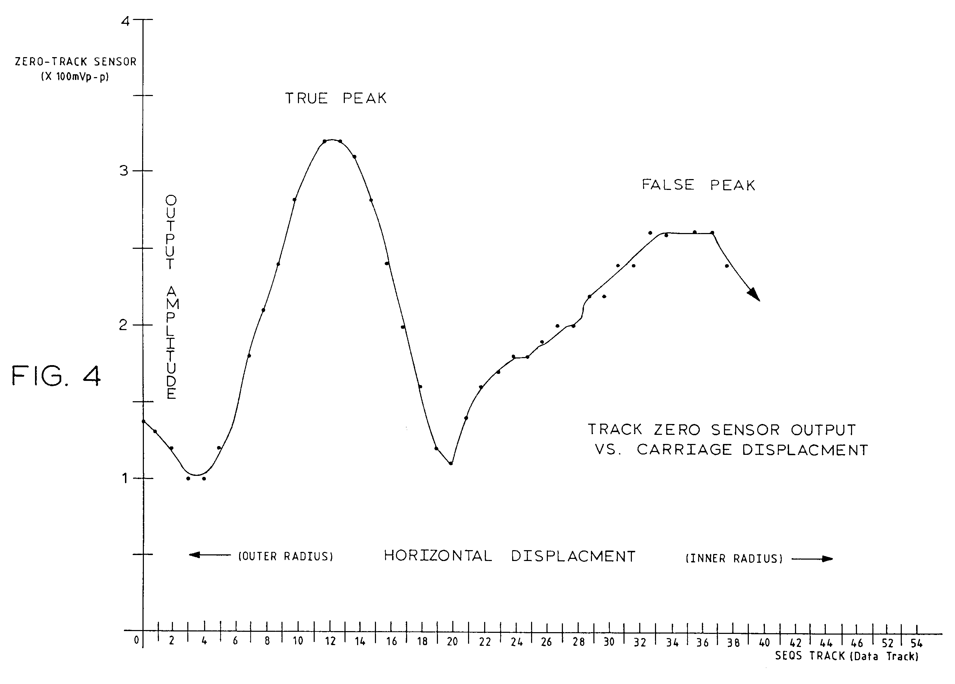

A typical track zero voltage output plot is illustrated in Figure 4. The plot shows that the maximum amplitude of the track zero sensor is given at approximately data track 13. This error is due to the mechanical tolerances is the disk drive assembly and an offset compensates for this error. A false peak is also shown to occur at data track 36.

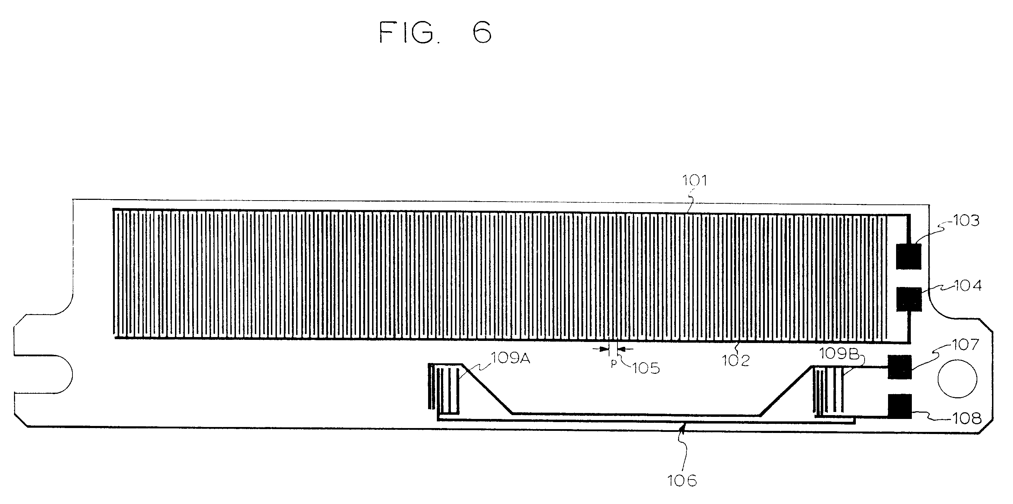

Referring again to Figure 6, an example of the track zero transducer pattern is illustrated. A separate pattern 106 is formed on the capacitive transducer receiver assembly. The track zero pattern 106 receives input on terminals 107 and 108. The track zero receiver pattern has two areas of interleaved members 109A and 109B at either end of the pattern. The transmitter used in the preferred embodiment of this invention is illustrated in Figure 8. The transmitter 110 includes a first pattern 111 which is disposed over the track positioning pattern of the receiver and is used to generate an output signal. A second area 112 is disposed of with the track zero pattern of the receiver of Figure 6. It is used to indicate the track zero position. Interleaved patterns 109A and 109B generate an output signal when passed over patterns 113A and 113B of Figure 8. Connection to the pattern of 110 of Figure 8 is made through terminals 114 through 117.

## INDEX POSITION

Referring back to Figure 2, spindle index sensor 29 provides the accurate circumferential position of the disk needed for disk interchangeability. The index sensing scheme of the present invention no longer requires the physical adjustment of the index sensor during manufacture of the disk drive. The present invention arbitrarily fixes, with an acceptable tolerance, the location of index sensor 29 in advance of the standard index hole position.

In Figure 2, an alignment disk is inserted into the drive after the manufacturing process. Index sensor 29 outputs signal 31 to index delay counter 33, where the index pulse is delayed while the data head 28 reads the index mark recorded in the data area of the alignment disk. The microprocessor 14 measures the time difference between occurrence of the spindle index pulse and the magnetic index recorded on the disk. This length of delay is converted to a binary number and used each time power is applied to the drive. In operation, index delay counter 33 counts down and issues to the microprocessor 14 the corrected index pulse. By using an adjustable delay stored in non-volatile memory instead of a physical adjustment of the sensor, the standardization of the index pulse is made more quickly and accurately while several parts are eliminated from the drive.

Figure 5 illustrates a top view of the index sensor within a disk drive of the present invention. As in Figure 1, the flexible disk 4 is rotated by spindle 2. The index hole 5 registers the disk with the spindle. An ID marker 6 is mounted on the hub and rotates with the disk 4. Index sensor 8 is mounted in a fixed position so that it generates an index pulse in advance of the pulse given by the position of index hole 5 in the hub of flexible disk 4. Index hole 5 in flexible disk 4 defines fixed position of the magnetic media with respect to spindle 2. Instead of adjusting the physical location of the sensor 8, an adjustable time delay that is stored in EEPROM is now employed so that exact standardization of the position of the sensor to the index hole is no longer required.

Although the present invention has been described in terms of its use with flexible media disk drives, this is done by way of example only. The present invention can also be used with hard disk drives or optical disk drives.

Thus, a novel radial and tangential positioning scheme that allows low capacity flexible disks to be used in high capacity flexible disk storage systems is described.

## Claims

1. An apparatus for positioning magnetic recording heads (28) upon rotating magnetic media (30) characterized by:
   a data head (28);
   a carriage (26) coupled to said data head;
   a disk (30) with tracks underneath said data head wherein said data head (28) recovers data from said disk;
   target positioning means (20, 24) for providing a destination of said data head (28);
   detecting means (32, 34, 36) for indicating actual location of said data head, said detecting means comprising a transducer (32, 34);
   comparing means (18) for comparing said actual location of said data head (28) to said destination, said comparing means coupled to said target positioning means (20, 24);
   memory means (12) coupled to said detecting means (32, 34, 36) for storing displacement offsets to compensate for variations in said transducer (32, 34).

2. The apparatus of claim 1 characterized in that said transducer comprises a capacitive transducer having a transmitter (32) and a receiver (34).

3. An apparatus for positioning magnetic recording heads (28) upon rotating magnetic media (30) characterized by:
   a data head (28);
   a carriage (26) coupled to said data head;
   a flexible disk (30) with tracks underneath said data head wherein said data head recovers data from said flexible disk;
   target positioning means (20, 24) for providing a destination of said data head (28);
   a transducer (32, 34) having a transmitter (32) and a receiver (34), said transmitter of said transducer coupled to said carriage (26), said transducer providing an output position signal representing actual position and dependent on a pitch (105) of the pattern (101, 102) of said transducer;
   comparing means (18) for comparing actual location of said data head to destination, said comparing means coupled to said receiver (34) and said positioning means (20, 24);
   memory means (12) for storing displacement offsets to compensate for variations in said pitch pattern (101, 102), said memory means (12) coupled to said target positioning means (20, 24).

4. The apparatus of claim 2 or 3 characterized in that a sine/cosine generator (36) is coupled to said transmitter (32) of said detecting means for providing a reference signal (38) to said comparing means (18).

5. The apparatus according to any of claims 1 to 4 characterized in that said comparing means is a head position detection circuit (18).

6. The apparatus according to any of claims 1 to 5 characterized in that said destination information of said data head (28) comes from a host interface (10).

7.  The apparatus according to any of claims 1 to 6 characterized in that said comparing means (18) provides position error signal (22) to a voice coil motor (24) for adjusting said carriage (26).

8.  The apparatus according to any of claims 1 to 7 characterized in that said detecting means (32, 34, 36) identifies phase alignment and/or track crossings.

9.  The apparatus according to any of claims 1 to 8 characterized in that performance of said capacitive transducer (32, 34) is based on the pitch (105) of the pattern (101, 102) of said capacitive transducer.

10. The apparatus of claim 9 characterized in that said memory means (12) stores displacement offsets to compensate for variations in said pitch pattern (101, 102).

11. The apparatus according to any of claims 2 to 10 characterized in that the receiver (34; fig. 6) of said capacitive transducer also includes a track zero sensor (106).

12. An index pulse detector characterized by:
    a spindle (2) mounted on the hub of a flexible disk drive;
    a flexible disk (4; 30) mounted on said spindle;
    an index hole (5) in said flexible disk (4; 30);
    an ID marker (6) coupled to said hub of the flexible disk drive;
    an index sensor (8; 29) mounted adjacent to said flexible disk;
    a memory means (12) coupled to said index delay counter (33) for storing an adjustable time delay in relation between the position of said index sensor (8; 29) and said index hole (5).

13. The apparatus of claim 12 further characterized by an index delay counter (33) coupled to said index sensor (8; 29) for generating a delayed index signal to the host interface (10).

14. The apparatus according to any of claims 12 to 14 characterized in that said ID marker (6) is a magnet inducing said index sensor (8; 29) to generate said index pulse signal.

15. An apparatus for improving the accuracy and reliability of a track zero sensor characterized by:
    a sensing means (106) mounted on the receiver (34; fig. 6) of the capacitive transducer;
    a memory means (12) coupled to said sensing means (106) for storing a displacement offset to compensate for mechanical variations in said sensing means.

16. The apparatus of claim 15 further characterized by a track zero demodulator (44) coupled to said sensing means (106).

17. The apparatus according to any of claims 1 to 16 characterized in that said memory means (12) is an EEPROM.

18. The apparatus according to any of claims 15 to 17 characterized in that the said location of data track zero is considered to be on the negative slope of the amplitude peak read from said sensing means (106).

## FIG. 1 (PRIOR ART)

ROTATION

## FIG. 5

ROTATION

FIG. 2

EP 0 484 907 A2

FIG. 3

START

50 — ENABLE VOICE COIL MOTOR / ACTIVATE SPINDLE MOTOR / VELOCITY MODE / DIRECTION IS O.D.
START MOVING TOWARD OUTER CRASH STOP

52 — 100 MS DELAY
DELAY TO START MOVING

54 — VELOCITY = 0 ?
KEEP MOVING / NO
YES
CARRIAGE IS IN CONTACT WITH REAR CRASH STOP

56 — SET HEAD POSITION REGISTERS TO ZERO / POSITION MODE / READ STARTING OFFSET FROM THE EEPROM

58 — POSITION CARRIAGE AT STARTING RADIUS

60 — MOVE 250 MICRO INCHES TOWARD I.D.

BEGIN PEAK SCAN

62 — SAMPLE TRACK ZERO DETECTOR WITH A/D CONVERTER

64 — IS THE PRESENT SAMPLE LARGER THAN THE PREVIOUS ONE ?
NO
YES
KEEP TRACK OF LARGEST SAMPLE AND IT'S LOCATION

66 — REPLACE PREVIOUS SAMPLE WITH PRESENT SAMPLE

68 — HAS THE CARRIAGE HOOVED MORE THAN 20,000 MICROINCHES ?
KEEP SCANNING | NO
YES

PEAK SCAN COMPLETE

70 — MOVE CARRIAGE TO THE LOCATION OF THE LARGEST SAMPLE

72 — READ TRACK ZERO OFFSET FROM THE EEPROM
OFF SET COMPENSATES FOR HISALICNMENT OF TRANSOUCER

74 — MOVE CARRIAGE TO OFFSET POSITION
TRUE TRACK ZERO LOCATION

76 — SIGNAL HOST THAT CARRIAGE IS AT TRACK ZERO RADIUS

78 — RE ZERO COMPLETE

EP 0 484 907 A2

FIG. 4

ZERO-TRACK SENSOR
(X 100mVp-p)

OUTPUT AMPLITUDE

TRUE PEAK

FALSE PEAK

TRACK ZERO SENSOR OUTPUT
VS. CARRIAGE DISPLACMENT

← (OUTER RADIUS)          HORIZONTAL  DISPLACMENT          (INNER RADIUS) →

SEOS TRACK (Data Track)

EP 0 484 907 A2

FIG. 6

FIG. 7

EP 0 484 907 A2

FIG. 8